(19) Europäisches Patentamt
European Patent Office
Office européen des brevets

(11) **EP 4 395 455 A1**

(12) **EUROPEAN PATENT APPLICATION**
published in accordance with Art. 153(4) EPC

(43) Date of publication:
**03.07.2024 Bulletin 2024/27**

(21) Application number: **22861738.7**

(22) Date of filing: **25.08.2022**

(51) International Patent Classification (IPC):
*H05B 3/00* (2006.01)     *H05B 1/02* (2006.01)
*G05F 1/46* (2006.01)     *G05F 1/575* (2006.01)

(52) Cooperative Patent Classification (CPC):
**H05B 1/0236; G05F 1/46; G05F 1/575; H05B 1/02;
H05B 3/00**

(86) International application number:
**PCT/KR2022/012750**

(87) International publication number:
**WO 2023/027530 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.08.2021 KR 20210112608**

(71) Applicant: **LG INNOTEK CO., LTD.**
**Seoul 07796 (KR)**

(72) Inventors:
• **YU, Beom Suk**
  **Seoul 07796 (KR)**
• **PARK, Kyu Sic**
  **Seoul 07796 (KR)**

(74) Representative: **M. Zardi & Co S.A.**
**Via G. B. Pioda, 6**
**6900 Lugano (CH)**

(54) **POWER SUPPLY DEVICE**

(57)    A power supply device according to an embodiment of the present invention is a power supply device for supplying power to a heating element, the power supply device comprising: a power supply unit which supplies power to the heating element; a current sensing unit which measures a current flowing through the heating element according to the power supplied by the power supply unit; a control unit which changes the feedback resistance of the power supply unit on the basis of the current measured by the current sensing unit; and a feedback resistor, the resistance of which is varied according to a control signal of the control unit, wherein the power supplied by the power supply unit varies according to the feedback resistance.

【FIG. 2】

**Description**

[Technical Field]

The teachings in accordance with exemplary and non-limiting embodiments of this invention relate generally to a power supply device, and more particularly, to a power supply device and a heating device that senses the current flowing through a heating element and varies the power supplied to the heating element to generate constant heat.

[Background Art]

In general, when driving a vehicle, not only the situation in front of the vehicle, but also the situation behind the vehicle is very important factors. In particular, when changing lanes or reversing, the driver must be aware of the situation behind and to the left and right of the vehicle before changing lanes or reversing to prevent the risk of an accident.

When changing lanes or reversing while driving in such a lane, the driver shall judge the situation behind or on both sides of the vehicle through the side mirrors protruding on both sides of the vehicle body or the room mirrors mounted in the cabin, and shall change lanes or reverse when the vehicle behind is in a safe condition at an appropriate distance or when it is determined that there are no obstacles behind.

To this end, it has recently become common to install camera modules on the front or rear of a vehicle to capture traffic information and subjects in front of and behind the vehicle, and output them through a display device in the vehicle's interior to monitor the situation of blind spots in front of and behind the vehicle, especially in the rear, to help safe driving.

However, since these camera modules are mounted on the front, rear, and left and right sides of the vehicle and exposed to the outside, there is a problem that when it rains or snows or the temperature drops rapidly, frost forms on the camera lens or the surface of the lens freezes, reducing the image quality and clarity of the recorded external images.

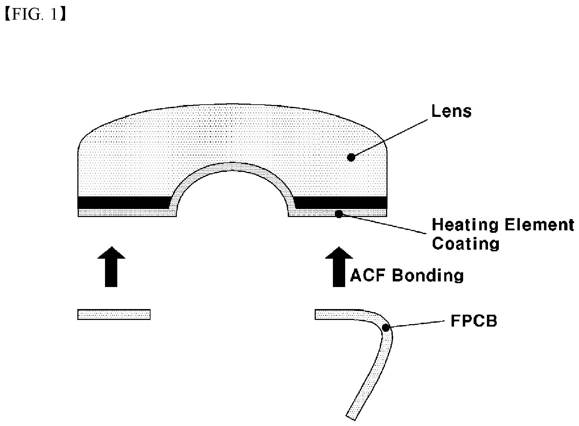

To prevent frost or ice from forming on the surface of the lens, a heating element that applies heat to the lens can be used. As shown in FIG. 1, a heating element is formed on one side of the lens, and by supplying power to the heating element and heating it up, the temperature of the surface of the lens can be increased to prevent frost or icing.

A heating element may be formed by coating a heating position, and to supply power to the heating element, a flexible printed circuit board (FPCB) may be connected via ACF bonding, and the heating element generates heat when power is supplied through the FPCB.

Although the heating element should heat up with constant heating power, there is a problem that the resistance value of the heating element varies depending on the bending of the lens or the quality of the coating, or the resistance value may change over time due to exposure to the external environment, so it does not generate a constant temperature and the function is reduced.

[Detailed Description of Invention]

[Technical Subject]

The technical problem that the present invention seeks to solve is to provide a power supply device, a heating device, and a lens module that senses the current flowing through a heating element and varies the power supplied to the heating element to generate constant heat.

[Technical Solution]

In one general aspect of the present invention, there may be provided a power supply device comprising: a power supply unit which supplies power to the heating element; a current sensing unit which measures a current flowing through the heating element according to the power supplied by the power supply unit; a control unit which changes the feedback resistance of the power supply unit on the basis of the current measured by the current sensing unit; and a feedback resistor, the resistance of which is varied according to a control signal of the control unit, wherein the power supplied by the power supply unit varies according to the feedback resistance.

Preferably, but not necessarily, the voltage of the power supplied from the power supply unit may be determined by the voltage distribution of the preset reference voltage according to the feedback resistor and first resistor.

Preferably, but not necessarily, the power supply unit may include: a power output unit to output power; and a feedback input unit to receive feedback, wherein the feedback resistor is connected to the feedback input unit, and the first resistor may be connected between the power output unit of power supply unit and the feedback input unit.

Preferably, but not necessarily, the feedback resistor may include a variable resistor whose resistance varies in response to a control signal from the control unit; and a fixed resistor including a resistor of a preset size.

Preferably, but not necessarily, the control unit may calculate a current resistance value of the heating element from the current measured by the current sensing unit, and may vary the feedback resistance according to the current resistance value of the heating element.

Preferably, but not necessarily, the power supply device may include a stabilizing unit to prevent overvoltage or under-voltage of the power outputted from the power supply unit.

Preferably, but not necessarily, the control unit may vary the feedback resistance of the power supply unit according to the temperature received from a temperature sensor measuring the external temperature.

Preferably, but not necessarily, the current sensing unit may include a current sensing resistor.

Preferably, but not necessarily, the power supply device may comprise an amplifying unit that amplifies a voltage at both ends of the current sensing resistor and applies it to the control unit.

In another general aspect of the present invention, there may be provided a heating device, comprising: a heating element to be heated by being supplied with power; a power supply unit to supply power to the heating element; a current sensing unit connected between the power supply unit and the heating element to measure a current flowing to the heating element; a feedback unit to provide a feedback signal to the power supply unit according to a change in the current measured by the current sensing unit; and a control unit to vary the feedback signal according to the current measured by the current sensing unit, wherein the power supplied by the power supply unit varies according to the feedback signal.

In still another general aspect of the present invention, there may be provided a lens module, comprising: a lens; and a heating device having a heating element disposed on a front surface of the lens, wherein the heating device includes: a power supply unit for supplying power to the heating element; a current sensing unit connected between the power supply unit and the heating element for measuring a current flowing through the heating element; a feedback unit for providing a feedback signal to the power supply unit in response to a change in the current measured by the current sensing unit; and a control unit for varying the feedback signal in response to the current measured by the current sensing unit, wherein the power supplied by the power supply unit depends on the feedback signal.

[Advantageous Effect]

According to embodiments of the present invention, a constant heating power can be maintained by compensating for deviations in the resistance value of the heating element. This enables process errors or limitations in the coating of the heating element to be overcome. Furthermore, the current can be controlled to reduce the size of the current supplied to the heating element, thereby reducing the size of the connector and enabling the heating element to be powered by internal power without the need for an external power source. In addition, it is possible to sense the ambient temperature and operate the heating function according to the temperature.

[Brief Description of Drawings]

FIG. 1 is a drawing to illustrate a heating element.
FIG. 2 is a block diagram of a power supply device according to an exemplary embodiment of the present invention.
FIGS. 3 to 6 are drawings to illustrate a power supply device according to an exemplary embodiment of the present invention.
FIG. 7 is a block diagram of a heating device according to an exemplary embodiment of the present invention.

[Best Mode]

Hereinafter, exemplary embodiments of the present invention will be described in detail with reference to the accompanying drawings.

However, the present invention is not limited to the given exemplary embodiments described, but may be implemented in a variety of different forms, and one or more of components among the exemplary embodiments may be optionally combined or substituted between embodiments within the scope of the present invention.

Furthermore, terms (including technical and scientific terms) used in the embodiments of the present invention, unless expressly specifically defined and described, are to be interpreted in the sense in which they would be understood by a person of ordinary skill in the art to which the present invention belongs, and commonly used terms, such as dictionary-defined terms, are to be interpreted in light of their contextual meaning in the relevant art.

Furthermore, the terms used in the embodiments of the invention are intended to describe the embodiments and are not intended to limit the invention.

In this specification, the singular may include the plural unless the context otherwise requires, and references to "at least one (or more) of A and (or) B and C" may include one or more of any combination of A, B, and C that may be assembled.

In addition, the terms first, second, A, B, (a), (b), and the like may be used to describe components of embodiments of the invention. Such terms are intended only to distinguish one component from another, and are not intended to limit the nature or sequence or order of such components by such terms.

Furthermore, when a component is described as "connected," "coupled," or "attached" to another component, it can include cases where the component is "connected," "coupled," or "attached" to the other component directly, as well as cases where the component is "connected," "coupled," or "attached" to another component that is between the component and the other component.

Furthermore, when described as being formed or disposed "above" or "below" each component, "above" or "below" includes not only when two components are in direct contact with each other, but also when one or more other components are formed or disposed between the two components. Furthermore, when expressed as "above" or "below", it may include the meaning of upward as well as downward with respect to a single component.

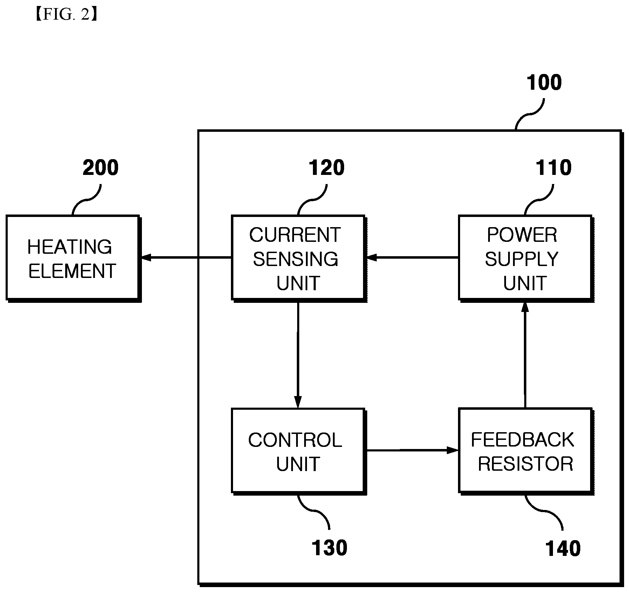

FIG. 2 is a block diagram of a power supply device according to an exemplary embodiment of the present invention.

The power supply device (100), according to one embodiment of the present invention, is a device for supplying power to a heating element (200), and comprises a power supply unit (110), a current sensing unit (120), a control unit (130), and a feedback resistor (140), and may include a connector (160), a stabilizing unit (170), an amplifying unit (180), a resistor, and the like. The heating element (200) may be a heating element that transfers heat to the lens of the car camera, or may be a heating element that transfers heat to various other devices.

The power supply unit (110) may supply power to the heating element (200).

More specifically, the power supply unit (110) may supply power to heat the heating element (200). In this case, the power supply unit (110) may supply power with a certain voltage so that the heating element (200) heats up with a preset heating power. The heating power of the heating element (200) may be set by a user. For example, the heating power may be set to 1.5 W, and may be set or changed to 2 W, 2.2 W, or the like. Alternatively, the heating power may vary depending on the external temperature. The heating element (200) may be formed by coating at the heating position, as shown in FIG. 1, and may be formed to have a preset resistance value. When a constant voltage power is supplied from the power supply unit (110), the voltage of the power supply unit (110) and the resistance of the heating element (200) may cause heating with a targeted heating power. However, there may be deviations in the resistance value of the heating element due to the bending of the lens or the quality of the coating, or the resistance value may change over time due to exposure to the external environment. When the resistance value varies, even if the power supply unit (110) supplies a constant voltage, the target heating power cannot be generated. The degree of heating is determined by the heating power, and if the resistance value of the heating element (200) changes, the voltage supplied to the heating element (200) must also change. Therefore, if the resistance value of the heating element (200) changes, the voltage of the power supplied by the power supply unit (110) can be adjusted to heat up to the target heating power through the current sensing unit (120), the control unit (130), and the feedback resistor (140).

The power supply unit (110) may be implemented as a power IC, and may operate in response to a control signal from the control unit (130) and supply power to maintain a set voltage. The power supplied by the power supply unit (110) may be supplied to the heating element (200) via a connector (160). Here, the connector (160) may be connected to the FPCB of FIG. 1.

The current sensing unit (120) may measure the current flowing to the heating element (200) according to the power supplied by the power supply unit (110).

More specifically, when power of a certain voltage is supplied to the heating element (200) from the power supply unit (110), a current flows due to the resistance of the heating element (200), and the current sensing unit (120) senses the current flowing in the heating element (200). When the power supply unit (110) provides a power supply of a voltage calculated to heat the heating element (200) to a target heating power according to the resistance value of the heating element (200), a current flows at a current value calculated by the supply voltage of the power supply unit (110) and the resistance value of the heating element (200), and the current sensing unit (120) senses that current.

The current sensing unit (120) may include a current sensing resistor. The current sensing resistor is connected in series with the location where the current is to be measured to measure the voltage at both ends, and the difference between the voltage at both ends and the resistance value of the current sensing resistor can be used to measure the current.

At this time, an amplifying unit (180) may be included to accurately determine the change in current sensed by the current sensing unit (120). When the current sensing unit (120) is implemented as a current sensing resistor, the amplifying unit (180) can measure even a small change in current by amplifying the voltage at both ends of the current sensing resistor.

The control unit (130) may vary the feedback resistor (140) of the power supply unit (110) according to the current measured by the current sensing unit (120). More specifically, the control unit (130) may vary the feedback resistor (140) in order to feedback to the power supply unit (110) a change in the current measured by the current sensing unit (120) so that the heating element (200) can be heated with a target heating power. As described above, when the resistance value of the heating element (200) changes, the current also changes accordingly, and the change in the resistance value of the heating element (200) can be known by sensing the current. In other words, when the voltage is constant, if the resistance changes or the current changes due to the resistance, the target heating power is not generated, so the feedback resistor (140) reflects the change in the resistance value of the heating element (200) to the supply power of the power supply unit (110) so that the heating power can be generated from the current resistance value of the heating element (200) to the target heating power. The control unit (130) can calculate the heating power of the heating element (200) by inputting the current flowing to the heating element (200) and the voltage supplied by the power supply unit (110). If the current heating power of the heating element (200) is different from the target heating power, the feedback resistor (140) may be varied to control the voltage supplied by the power supply unit (110) so that the heating element (200) can be heated with the target heating power.

The feedback resistor (140) varies its resistance in response to a control signal from the control unit (130).

More specifically, the feedback resistor (140) varies its resistance value in response to a control signal from the control unit (130). The feedback resistor (140) is a resistor for providing feedback to reflect a change in the resistance value of the heating element (200) to the power supply unit (110), and the power supplied by the power supply unit (110) depends on the feedback resistor (140).

The feedback resistor (140) may comprise a variable resistor such that it can be varied in response to a control signal from the control unit (130), wherein the variable resistor may comprise a Digital Potentiometer (DPM) operated by a digital signal that is a control signal from the control unit (130). By varying the resistance of the digital potentiometer, the control unit (130) can feedback the changes in the measured current to the power supply unit (110).

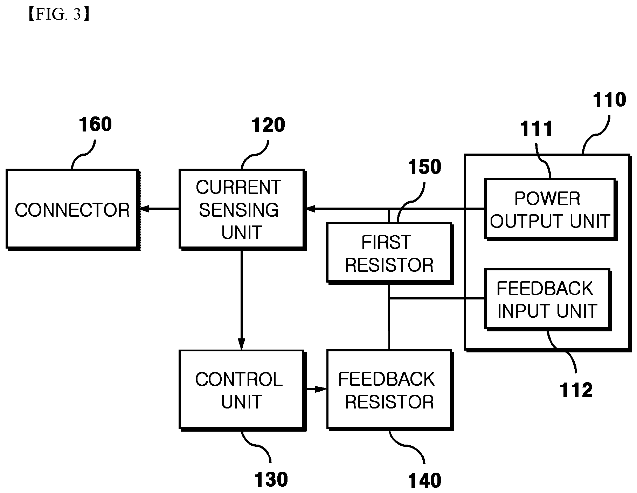

The voltage of the power supplied by the power supply unit (110) may be determined by the voltage distribution of the preset reference voltage according to the feedback resistor (140) and the first resistor (150). The power supply unit (110) may include a power output unit (111) for outputting power supplied to the heating element (200) and a feedback input unit (112) for receiving feedback, as shown in FIG. 3, wherein the feedback resistor (140) may be connected to the feedback input unit (112), and the first resistor (150) may be connected between the power output unit (111) and the feedback input unit (112) of the power supply unit (110).

The first resistor (150) has a fixed resistance value and is connected in series with the feedback resistor (140). The voltage of the power supplied by the power supply unit (110) is fed back to the feedback input unit (112) according to the voltage distribution of the first resistor (150) and the feedback resistor (140), and the feedback resistor (140) is varied by the control unit (130) so that the voltage inputted to the feedback input unit (112) varies, thereby adjusting the voltage of the power supplied by the power output unit (111) of the power supply unit (110). In this case, a preset reference voltage is used to generate the power supplied by the power supply unit (110). For example, the threshold voltage may be 1V, and may be set or changed to 2V. The threshold voltage may be set according to the size of the power source used by the power supply unit (110) to generate the power.

So that the reference voltage is a voltage across the feedback resistor (140), and the voltage of the power supplied by the power supply unit (110) is a voltage across the first resistor (150) and the feedback resistor (140), the feedback resistor (140) can be connected to the feedback input unit (112), and the first resistor (150) can be connected between the power output unit (111) and the feedback input unit (112), as shown in FIG. 3. In other words, the voltage of the power supplied by the power supply unit (110) is determined according to the reference voltage, the first resistor (150), and the feedback resistor (140), and the voltage of the power supplied by the power supply unit (110) is varied according to the change of the feedback resistor (140).

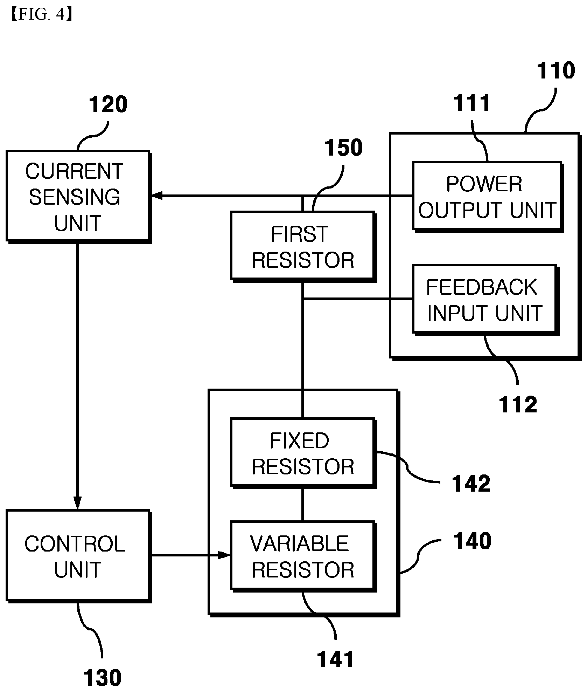

The feedback resistor (140) may include a variable resistor (141) whose resistance varies in response to a control signal from the control unit (130), and a fixed resistor (142) that includes a resistor of a preset size. As previously described, the power supplied from the power supply unit (110) is determined by the feedback resistor (140) and is significantly affected by changes in the feedback resistor 140. An abnormal current may flow in the current measured by the current sensing unit (120), and at this time, if the change is large, and if the feedback resistor (140) is implemented with only a variable resistor, the change in the signal inputted to the feedback input unit (112) may be large, causing the power supply unit (110) to fail. To prevent this, the feedback resistor may include a fixed resistor (142) and a variable resistor (141), as shown in FIG. 4. The resistance value of the variable resistor (141) is varied by the control unit (130), but the feedback signal applied to the power supply unit (110) by the fixed resistor (142) can be stabilized even if a sudden variation of the variable resistor (141) is made. Furthermore, by including the fixed resistor (142), the effect of a change in the resistance value of the variable resistor (141) can be reduced, enabling a fine control.

The control unit (130) may calculate the current resistance value of the heating element (200) from the current measured by the current sensing unit (120), and may vary the feedback resistor (140) according to the current resistance value of the heating element (200). The power supply unit (110) may supply a constant voltage, and the current resistance value of the heating element (200) can be calculated from the current measured by the current sensing unit (120). Using the current resistance value of the heating element (200), the resistance of the feedback resistor (140) can be varied.

The control unit (130) may vary the feedback resistor (140) to enable the power supply unit (110) to supply power at a voltage that can be generated at the target heating power at the current resistance value of the heating element (200). When the feedback resistor (140) is varied, the voltage of the power supplied by the power supply unit (110) varies. The current flowing to the heating element (200) varies accordingly, and the control unit (130) determines whether the voltage supplied by the power supply unit (110) can heat the heating element (200) at the target heating power by using the change in the current input from the current sensing unit (120), and maintains the current resistance of the feedback resistor (140) if the voltage supplied by the power supply unit (110) can heat the heating element (200) at the target heating power. If the voltage supplied by the power supply (110) does not allow the heating element (200) to generate the target heating power, the feedback resistor (140) is varied repeatedly.

In the event of an overvoltage or under-voltage in the power outputted from the power supply unit (110), a failure of the heating element (200) or its internal components may occur, which may be prevented by a stabilizing unit (170). The stabilizing unit (170) may cut off the power supply to the power supply unit (110) if the voltage of the power outputted from the power supply unit (110) is greater than the first reference voltage or less than the second reference voltage. In addition, if an abnormality is detected in the power supply unit (110), the power supply unit (110) may be disconnected or connected in response to a control signal from the control unit (130) or an external control signal. The stabilizing unit (170) may include a smart switch.

The control unit (130) may vary the feedback resistance of the power supply unit according to the temperature received from the temperature sensor (300) that measures the external temperature. In addition to varying the feedback resistance (140) according to the current measured by the current sensing unit (120), the control unit (130) may vary the feedback resistor (140) of the power supply unit (110) according to the temperature received from the temperature sensor (300) that measures the external temperature. Even if the heating element (200) is heated with a targeted heating power, the effectiveness of the heating function may be reduced if the external temperature is too low. Therefore, by receiving external temperature information from the temperature sensor (300) that measures the external temperature, the feedback resistor (140) of the power supply unit (110) can be varied to control the heating power differently. When the external temperature is below the first temperature, the target heating power of the heating element (200) can be set high, and the feedback resistor (140) of the power supply unit (110) can be varied accordingly. At this time, the target heating power or feedback resistance value according to the external temperature may be preset, and the data may be stored in a table.

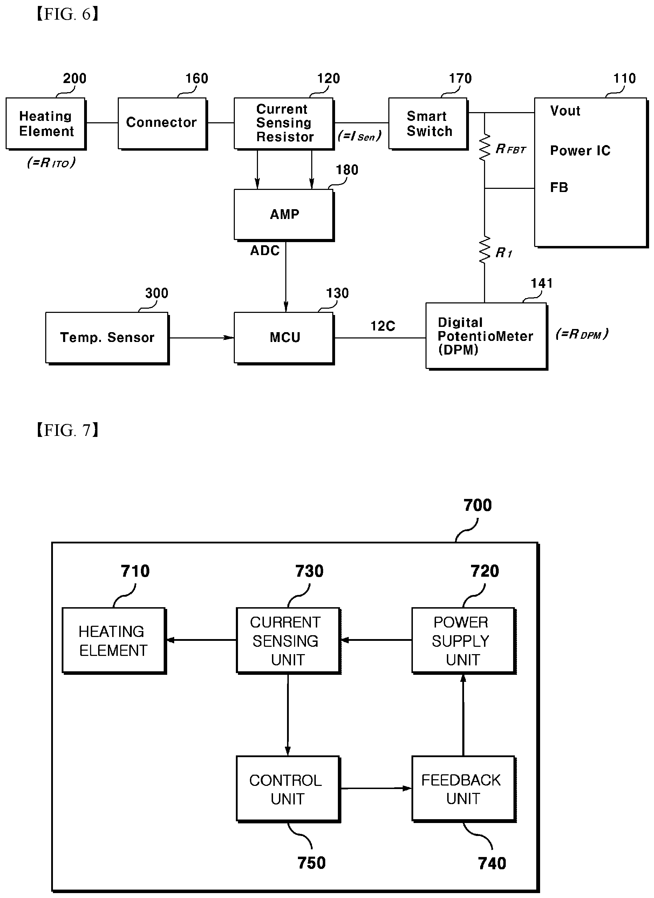

The power supply device (100) according to an embodiment of the present invention may be implemented as shown in FIG. 6. The power supply unit (110) is implemented as a POWER IC to supply VOUT power to the heating element (200) via a smart switch (170). The heating element (200) may be connected via the connector (160). The heating element (200) has a resistance value of R_ITO, and current flows through the supplied VOUT, and the current sensing unit (120) measures the current flowing through the heating element (200). The current sensing unit (120) may be implemented as a current sensing resistor, and the current measured by the current sensing unit (120) is amplified by the amplifying unit (180) and converted into a digital signal through the ADC and inputted to the control unit (130), the MCU. The control unit (130) determines whether the heating element (200) is heating at the target heating power using the current sensed by the current sensing unit (120) and VOUT, and if the heating element (200) is not heating at the target heating power at the current resistance value, it changes the resistance of the feedback resistor (140), the DPM. At this time, the control unit (130), the MCU, sends a control signal to the feedback resistor (140), the DPM, via I2C communication to change the resistance of the DPM. The current measured by the current sensing unit (120) is fed back to the power supply unit (110) through the feedback resistor (140), R1, and R_FBT, and the voltage of VOUT is varied accordingly. This enables the heating element (200) to adaptively respond to changes in the resistance of the heating element (200) by ensuring that VOUT is supplied so that the heating element (200) can be heated with heating power. In addition, the heating power of the heating element (200) can be controlled by varying the feedback resistor (140) in response to receiving the external temperature from the temperature sensor (300) that measures the external temperature.

The feedback resistance R_DPM varied by the control unit (130) may be set as follows.

【Equation 1】

$$R_{DPM} = \frac{V_{Ref} \cdot R_{FBT}}{V_{pass} \cdot \sqrt{\dfrac{V_{out\text{-}first}}{R_{ITO} \cdot I_{sen}} - V_{Ref}}} - R_1$$

where, V_REF is a reference voltage of the power supply, R_FBT is a first resistor, R1 is a fixed resistance of the feedback resistor, R_ITO is a resistance according to the initial process of the heating element (target good resistance of the heating element), V_PASS is a V_OUT voltage that satisfies the target heating power (P_PASS) at the initial process resistance of the heating element, V OUT-FIRST is an initial output voltage of the power supply, and I_SEN is a measured current of the current sensing part. Here, V_REF, R_FBT, R1, R_ITO, V_PASS, and V OUT-FIRST are constant values that are fixed according to the design, and R_DPM can be calculated by I-SEN.

In FIG. 6, V_OUT can be represented as follows.

【Equation 2】

$$V_{out} = V_{Ref} \cdot \frac{R_{FBB} + R_{FBT}}{R_{FBB}}$$

where, $R_{FBB} = R_{DPM} + R_1$.

From the expression for the heating power of the heating element, we can derive the expression for V_OUT

【Equation 3】

$$P_{pass} = \frac{(V_{out})^2}{R_{ITO}} \Rightarrow V_{out} = \sqrt{P_{pass} \cdot R_{ITO}}$$

From Equation 2 and Equation 3, we can derive the expression below.

【Equation 4】

$$\sqrt{P_{pass} \cdot R_{ITO}} = V_{Ref} \cdot \frac{R_{FBB} + R_{FBT}}{R_{FBB}}$$

Equation 4 can be written as R_FBB, and then using $R_{FBB} = R_{DPM} + R_1$ it can be written by R_DPM.

【Equation 5】

$$R_{FBB} = \frac{V_{Ref} \cdot R_{FBT}}{\sqrt{P_{pass} \cdot R_{ITO}} - V_{Ref}}$$

$$R_{DPM} = \frac{V_{Ref} \cdot R_{FBT}}{\sqrt{P_{pass} \cdot R_{ITO}} - V_{Ref}} - R_1$$

where,

$$R_{ITO} = \frac{V_{out\text{-}first}}{I_{sen}} \text{이고,} \quad P_{pass} = \frac{(V_{pass})^2}{R_{ITO}},$$

, Applying this, the expression in Equation 1 above is derived. R_DPM can be calculated by I_SEN, which can be varied by calculating a feedback resistance by the control unit (130) using the current sensed by the current sensing unit (120). By doing so, the power supply voltage of the power supply unit (110) can be adaptively varied according to the resistance value of the heating element (200), so that the heating element (200) can be heated at the target heating power even if the resistance value of the heating element (200) varies instead of being constant.

The power supply device according to an embodiment of the present invention may be formed on a single PCB. If space is limited, it may be divided into a plurality of PCBs, each of which may be connected to an FPCB or the like. Since it is possible to feedback the current according to the resistance value of the heating element (200), it is possible to supply enough power to heat the heating element with heating power using only internal power rather than external power. If it is difficult to control the power supplied to the heating element, the maximum voltage is provided to the heating element, which increases the current flowing to the heating element and increases the size of the connector or cable connecting the heating element. In addition, it is difficult to provide the maximum voltage with internal power, so external power must be supplied. However, the power supply device according to an exemplary embodiment of the present invention can adaptively vary the voltage of the power supply unit (110) according to the resistance value of the heating element (200), so that an external power source is not required and the size of the connector or cable can be reduced to efficiently supply power to the heating element.

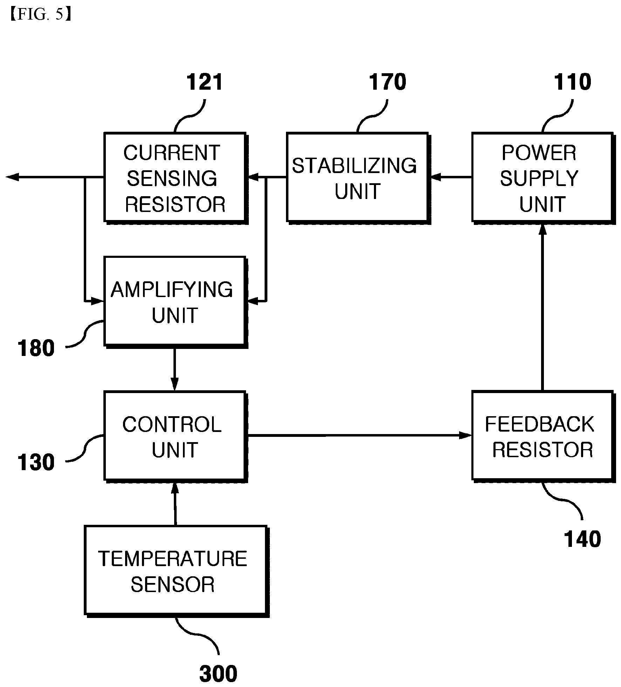

FIG. 7 is a block diagram of a heating device according to an exemplary embodiment of the present invention. The detailed description of each configuration of the heating device (700) in FIG. 7 corresponds to the detailed description of the configuration of the power supply device (100) in FIGS. 1 to 6, and redundant descriptions will be omitted hereinafter.

The heating device (700) according to an exemplary embodiment of the present invention may comprise a heating element (710), a power supply unit (720), a current sensing unit (730), a feedback unit (740), and a control unit (750). The heating element (710) is powered and heats up, and the power supply unit (720) supplies power to the heating element (710) so that the heating element (710) heats up. A current sensing unit (730) is connected between the power supply unit (720) and the heating element (710) to measure the current flowing in the heating element (710), and a feedback unit (740) provides a feedback signal to the power supply unit (720) according to a change in the current measured by the current sensing unit (730), and a control unit (750) varies the feedback signal according to the current measured by the current sensing unit (730). At this time, the power supplied by the power supply unit (720) varies according to the feedback signal.

FIG 7 is a block diagram of a heating device according to one embodiment of the present invention. The detailed description of each configuration of the heating device (700) in FIG. 7 corresponds to the detailed description of the configuration of the power supply device (100) in FIGS. 1 to 6, and hereinafter, overlapping descriptions will be omitted.

The heating device (700) according to an exemplary embodiment of the present invention may comprise a heating element (710), a power supply unit (720), a current sensing unit (730), a feedback unit (740), and a control unit (750). The heating element (710) is powered and heats up, and the power supply unit (720) supplies power to the heating element (710) so that the heating element (710) heats up. A current sensing unit (730) is connected between the power supply unit (720) and the heating element (710) to measure the current flowing in the heating element (710), and a feedback unit (740) provides a feedback signal to the power supply unit (720) according to a change in the current measured by the current sensing unit (730), and a control unit (750) varies the feedback signal according to the current measured by the current sensing unit (730). At this time, the power supplied by the power supply unit (720) varies according to the feedback signal.

A lens module according to an exemplary embodiment of the present invention may comprise a lens and a heating device.

The detailed description of the heating element included in the lens module according to one embodiment of the present invention corresponds to the detailed description of the power supply device (100) in FIGS. 1 to 6 and the heating element (700) in FIG. 7, and the redundant description will be omitted hereinafter.

A heating device of a lens module according to an exemplary embodiment of the present invention may comprise a heating element disposed on one surface of the lens, and the heating device may comprise a power supply unit for supplying power to the heating element, a current sensing unit connected between the power supply unit and the heating element to measure a current flowing in the heating element, a feedback unit for providing a feedback signal to the power supply unit according to a change in the current measured by the current sensing unit, and a control unit for varying the feedback signal according to the current measured by the current sensing unit, and the power supplied by the power supply unit varies according to the feedback signal.

One of ordinary skill in the art to which this invention relates will understand that variations may be implemented without departing from the essential features of the above-described subject matter. The disclosed methods are therefore to be considered from an illustrative rather than a limiting point of view. The scope of the invention is shown in the patent claims and not in the foregoing description, and all differences within the scope of the claims are to be construed as included in the invention.

**Claims**

1. A power supply device for supplying power to heating element, comprising:

    a power supply unit configured to supply power to the heating element;
    a current sensing unit configured to measure a current flowing through the heating element according to the power supplied by the power supply unit;
    a control unit configured to vary a feedback resistance of the power supply unit according to the current measured by the current sensing unit; and
    a feedback resistor, the resistance of which is varied according to a control signal of the control unit,
    wherein the power supplied by the power supply unit varies according to the feedback resistance.

2. The power supply device of claim 1, wherein a voltage of the power supplied from the power supply unit is determined by a voltage distribution of a preset reference voltage according to the feedback resistor and a first resistor.

3. The power supply device of claim 2, wherein the power supply unit comprises:

    a power output unit configured to output power; and
    a feedback input unit configured to receive feedback,
    wherein the feedback resistor is connected to the feedback input unit, and the first resistor is connected between the power output unit and the feedback input unit of power supply unit.

4. The power supply device of claim 1, wherein the feedback resistor comprises:

    a variable resistor unit whose resistance varies according to a control signal from the control unit; and
    a fixed resistor unit comprising a resistor of a preset size.

5. The power supply device of claim 1, wherein the control unit calculates a current resistance value of the heating element from the current measured by the current sensing unit, and varies the feedback resistance according to the current resistance value of the heating element.

6. The power supply device of claim 1, comprising a stabilizing unit configured to prevent overvoltage or under-voltage of the power output from the power supply unit.

7. The power supply device of claim 1, wherein the control unit varies the feedback resistance of the power supply unit according to a temperature received from a temperature sensor measuring an external temperature.

8. The power supply device of claim 1, wherein the current sensing unit comprises a current sensing resistor.

9. The power supply device of claim 8, comprising an amplifying unit configured to amplify a voltage between both ends of the current sensing resistor and apply it to the control unit.

10. A heating device, comprising:

    a heating element to be heated by being supplied with power;
    a power supply unit to supply power to the heating element;
    a current sensing unit connected between the power supply unit and the heating element to measure a current flowing to the heating element;
    a feedback unit configured to provide a feedback signal to the power supply unit according to a change in the current measured by the current sensing unit; and
    a control unit configured to vary the feedback signal according to the current measured by the current sensing unit,
    wherein the power supplied by the power supply unit varies according to the feedback signal.

【FIG. 1】

Lens

Heating Element Coating

ACF Bonding

FPCB

【FIG. 2】

**100**

**200**

**120**

**110**

| HEATING ELEMENT | CURRENT SENSING UNIT | POWER SUPPLY UNIT |

| CONTROL UNIT | FEEDBACK RESISTOR |

**130**

**140**

【FIG. 3】

【FIG. 4】

【FIG. 5】

【FIG. 6】

【FIG. 7】

## INTERNATIONAL SEARCH REPORT

| International application No. |
|---|
| **PCT/KR2022/012750** |

### A. CLASSIFICATION OF SUBJECT MATTER

**H05B 3/00**(2006.01)i; **H05B 1/02**(2006.01)i; **G05F 1/46**(2006.01)i; **G05F 1/575**(2006.01)i

According to International Patent Classification (IPC) or to both national classification and IPC

### B. FIELDS SEARCHED

Minimum documentation searched (classification system followed by classification symbols)

H05B 3/00(2006.01); A61F 9/02(2006.01); G01J 1/02(2006.01); G02B 7/02(2006.01); G03B 17/02(2006.01); H01L 21/67(2006.01); H02M 3/155(2006.01); H02M 3/28(2006.01); H05B 1/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전원(power source), 전류센서(current sensor), 가변저항(variable resistance), 피드백(feedback), 제어(control)

### C. DOCUMENTS CONSIDERED TO BE RELEVANT

| Category* | Citation of document, with indication, where appropriate, of the relevant passages | Relevant to claim No. |
|---|---|---|
| Y | JP 2020-201328 A (MAXELL HOLDINGS LTD.) 17 December 2020 (2020-12-17)<br>See paragraphs [0025]-[0035]; claim 1; and figure 4. | 1-10 |
| Y | JP 2017-121157 A (ASNER ELECTRONIC CO., LTD.) 06 July 2017 (2017-07-06)<br>See paragraph [0018]; and claim 1. | 1-10 |
| Y | KR 10-1548216 B1 (KOREA ATOMIC ENERGY RESEARCH INSTITUTE) 31 August 2015 (2015-08-31)<br>See paragraph [0015]; and claim 7. | 1-9 |
| A | KR 10-1623945 B1 (SPOCOM CO., LTD.) 24 May 2016 (2016-05-24)<br>See claims 1-4. | 1-10 |
| A | KR 10-2021-0053348 A (LAM RESEARCH CORPORATION) 11 May 2021 (2021-05-11)<br>See paragraphs [0021]-[0023]; and claims 1-3. | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 November 2022** | **03 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2">

**INTERNATIONAL SEARCH REPORT**
Information on patent family members
</td><td>

International application No.

**PCT/KR2022/012750**
</td></tr>
</table>

| Patent document cited in search report | | | Publication date (day/month/year) | Patent family member(s) | | | Publication date (day/month/year) |
|---|---|---|---|---|---|---|---|
| JP | 2020-201328 | A | 17 December 2020 | None | | | |
| JP | 2017-121157 | A | 06 July 2017 | CN | 106936295 | A | 07 July 2017 |
| | | | | CN | 106936295 | B | 16 July 2019 |
| | | | | CN | 205829445 | U | 21 December 2016 |
| | | | | EP | 3188350 | A1 | 05 July 2017 |
| | | | | EP | 3188350 | B1 | 07 November 2018 |
| | | | | JP | 6731764 | B2 | 29 July 2020 |
| | | | | US | 2017-0187301 | A1 | 29 June 2017 |
| | | | | US | 9698702 | B1 | 04 July 2017 |
| KR | 10-1548216 | B1 | 31 August 2015 | None | | | |
| KR | 10-1623945 | B1 | 24 May 2016 | WO | 2017-086541 | A1 | 26 May 2017 |
| KR | 10-2021-0053348 | A | 11 May 2021 | CN | 112753097 | A | 04 May 2021 |
| | | | | WO | 2020-068546 | A2 | 02 April 2020 |
| | | | | WO | 2020-068546 | A3 | 07 May 2020 |

Form PCT/ISA/210 (patent family annex) (July 2022)